Europäisches Patentamt

European Patent Office

Office européen des brevets

(11) Publication number: **0 268 433 B1**

# EUROPEAN PATENT SPECIFICATION

(45) Date of publication of patent specification: **24.04.91**

(21) Application number: **87310021.8**

(22) Date of filing: **12.11.87**

(51) Int. Cl.⁵: **F02D 13/02**, F02B 31/00, F02D 33/02

(54) **Method of controlling an air/fuel ratio for an internal combustion engine.**

(30) Priority: **12.11.86 JP 269335/86**

(43) Date of publication of application:
**25.05.88 Bulletin 88/21**

(45) Publication of the grant of the patent:
**24.04.91 Bulletin 91/17**

(84) Designated Contracting States:
**DE FR GB IT**

(56) References cited:
**EP-A- 0 161 611
GB-A- 2 162 246
US-A- 4 480 606**

**PATENT ABSTRACTS OF JAPAN, vol. 9, no. 272 (M-425)[1995], 30th October 1985; & JP-A-60 116 834 (TOYOTA JIDOSHA K.K.) 24-06-1985**

**PATENT ABSTRACTS OF JAPAN, vol. 8, no. 166 (M-314)[1603], 2nd August 1984; & JP-A-59 63 338 (TOYOTA JIDOSHA K.K.) 11-04-1984**

**Motronic, R. Bosch GmbH, VIH/VDT 9/85, p.**

21

(73) Proprietor: **HONDA GIKEN KOGYO KABUSHIKI KAISHA
1-1, 2-chome Minami-Aoyama
Minato-ku Tokyo(JP)**

(72) Inventor: **Kishi, Noriyuki
3-9-2, Azusawa
Itabashi-ku Tokyo(JP)**
Inventor: **Katoh, Atsushi
3-8-43, Minami-cho
Higashikurume-shi Tokyo(JP)**
Inventor: **Saita, Tomohisa
2-10-45, Sakae-cho
Asaka-shi Saitama(JP)**

(74) Representative: **Piesold, Alexander J. et al
Frank B. Dehn & Co. Imperial House 15-19 Kingsway
London WC2B 6UZ(GB)**

## Description

The present invention relates to a method of controlling an air/fuel ratio for an internal combustion engine and, in particular, for an engine having two or more intake valves in each cylinder with a mechanism for varying the operation of those valves by a valve switching device. Specifically, the method utilizes a very lean mixture ratio when a certain condition is met in the engine having a valve switching device and a method of setting an air/fuel ratio by gradually changing the air/fuel ratio according to the timing of the switching of the valve switching device thereby to smoothly change the air/fuel ratio according to valve switching without involving an abrupt change in the engine output.

Japanese Laid-Open Patent Publication No. 61-(1986)-19911, for example, filed by the same applicant as the applicant of the present application, discloses a valve switching device for opening and closing only one of two intake valves of each cylinder in order to increase the rate of flow of intake air and improve the charging efficiency due to intake air inertia in a low engine speed range and for opening and closing both intake valves so as to reduce resistance to the flow of intake air as much as possible in a high engine speed range. Where such a valve switching device is employed, when only one intake valve is opened and closed, the intake air flows from an offset position on one side into the combustion chamber to generate a swirl therein for improving vaporization of the fuel, as described in Japanese Patent Application No. 60(1985)-285188 also filed by the same applicant as the applicant of the present application. It has been found that in the presence of such a swirl, normal combustion is possible even if the air/fuel ratio is much leaner than the stoichiometric air/fuel ratio normally considered to be the ideal ratio. Therefore, it is possible to achieve both increased engine output performance and fuel economy by changing the air/fuel ratio in relation to the operation of the valve switching device.

Other examples of internal combustion engines with valve operating mechanisms for varying the intake air flow to the engine cylinders and controlling the air/fuel ratio are disclosed in U.S. Patents 4,494,502; 4,494,503 and 4,494,506. The latter of these patents discloses engines in which engine output is decreased when engine speed is above a reference value; in one embodiment this is done by retarding the closing time of an intake valve, and in another, separate embodiment this is done by decreasing the amount of fuel injected by a nozzle.

From Motronic, p. 21 (Bosch: KH/VDT, 09/85) it is known to vary the air/fuel ratio of an engine with engine speed using a map of values which also takes into account engine load. There is no disclosure of changing the effective opening of the engine intake valves.

From GB-A-2 162 246 it is known to use one of a pair of intake valves at low engine speeds and both intake valves at high engine speeds. From JP-A-59 63338 (abstract) it is known to vary the effective intake valve opening of an engine in accordance with engine operating conditions. In both these documents there is no disclosure of varying the air/fuel ratio.

It is known from JP-A-60 116834 (abstract) to change the intake valve opening characteristics of an engine from one state to another, and simultaneously to make the air/fuel mixture richer by injecting fuel to the intake passage. There is no disclosure of gradually varying the air/fuel ratio.

Generally, valve switching is carried out under such conditions that no significant change in the engine output is caused by such valve switching. However, if the air/flow ratio is simultaneously changed, then the engine output is abruptly varied and the engine cannot be utilized efficiently or comfortably.

According to the present invention, there is provided a method of controlling an air/fuel ratio for an internal combustion engine having a valve switching device for changing the effective opening of intake valves to the cylinder of an engine as a function of at least engine rotational speed, comprising:

gradually varying the air/fuel ratio according to at least a change in said engine rotational speed in a range of rotational speeds including when said valve switching device changes the valve effective opening, toward a richer air/fuel ratio during increasing engine rotational speed and a leaner air/fuel ratio during decreasing engine rotation speed.

Normally when the air/fuel ratio is changed from a lean mixture to a rich mixture or from a rich mixture to a lean mixture, the engine output is respectively increased or reduced. An abrupt change or shock can be avoided by gradually changing the air/fuel ratio.

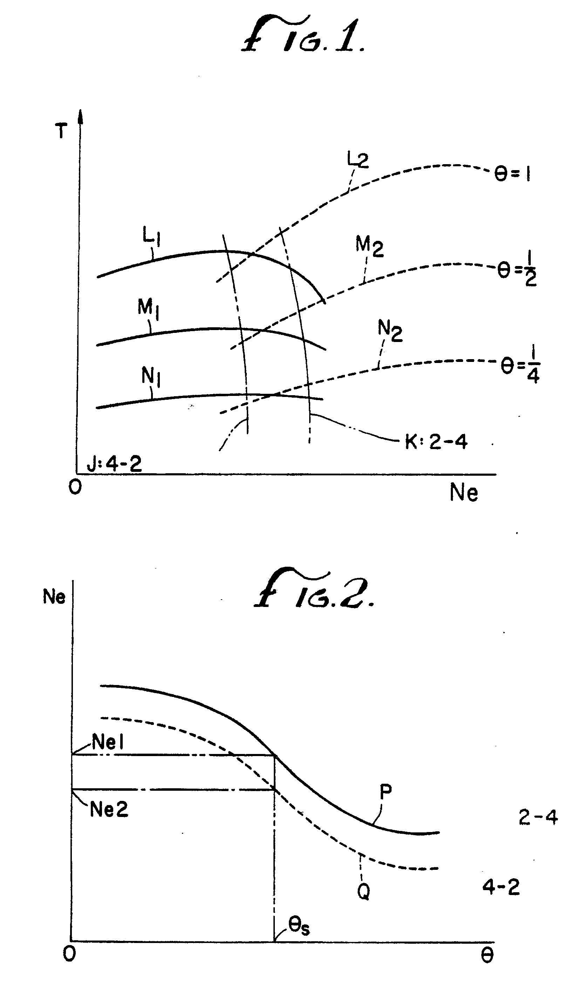

A preferred embodiment of the present invention will now be described by way of example and with reference to the accompanying drawings, wherein FIGS. 1, 2 and 3 are graphs showing the performance characteristics of an internal combustion engine employing the present invention.

Specifically, the preferred embodiment will now be described in connection with a multi-cylinder engine having two intake valves and two exhaust valves per cylinder with a valve operating mechanism with a switching device capable of selectively operating either all four valves of each cylinder (4-valve mode) or only one intake and one exhaust valve (2-valve mode) of each cylinder. However, it is to be understood that the invention is also applicable to engines having other combinations of multiple valves and opening and closing mechanisms.

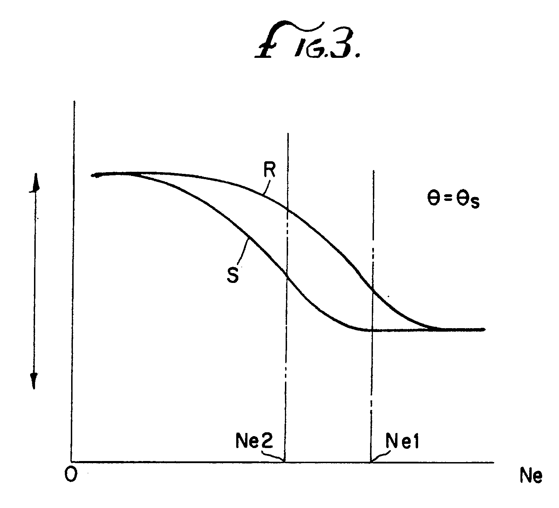

FIGS. 1 and 2 are graphs showing the manner in which the engine output varies and also showing the conditions for effecting switching between 4-valve and 2-valve modes. In the 4-valve mode, the two intake valves and the two exhaust valves are opened and closed as a function of the throttle valve opening $\theta$ and the engine rotational speed Ne. In the 2-valve mode, only one of the intake valves and only one of the exhaust valves are opened and closed as a function of the throttle valve opening $\theta$ and the engine rotational speed Ne.

In FIG. 1, the engine output is plotted as a function of engine speed for each of three throttle valve positions, namely, the curves L1, L2 when $\theta$ = 1, i.e., when the throttle valve is fully open, curves M1, M2 when $\theta$ = 1/2, i.e., when the throttle valve is half open, and curves N1, N2 when $\theta$ = 1/4, i.e., when the throttle valve is open to 1/4 of the full opening. The curves L1, M1 and N1 represent the 2-valve mode and curves L2, M2 and N2 represent the 4-valve mode. It is to be noted that for each throttle valve opening in the 2-valve and 4-valve modes of operation, the respective curves intersect at certain engine speeds. Therefore, the engine output is not varied abruptly, i.e., no shock is produced by effecting switching between the 2-valve and 4-valve modes at precisely the engine speeds where the curves intersect because the engine output is identical for that engine speed. However, as a practical matter, as indicated by the imaginary lines J and K, it is preferable to carry out switching between the 2-valve and 4-valve modes at points on opposite sides of the intersection of the output curves in the 2-valve and 4-valve modes, so that a certain degree of hysteresis will be given to the switching operation for stable control.

The graph of FIG. 2 illustrates boundary lines of conditions for selecting the 2-valve and 4-valve modes in a coordinate plane having a horizontal axis representing the throttle opening $\theta$ and a vertical axis representing the engine rotational speed Ne. The solid-line curve P shows a boundary line across which switching is effected from the 2-valve mode to the 4-valve mode, and the broken-line curve Q shows a boundary line across which switching is carried out from the 4-valve mode to the 2-valve mode. These curves P and Q are substantially equally spaced in the vertical direction (i.e., engine speed) from each other along their entire lengths. Such hysteresis in the switching between the 2-valve and 4-valve modes is preferable from the standpoint of stable control, as described above, for avoiding hunting of the engine during the transition between valve operating modes.

These graphs of FIGS. 1 and 2 show that the 4-valve mode is generally selected in a high engine rotational speed range, and the boundary lines P and Q are dependent on the throttle opening in FIG. 2. The engine intake vacuum may be employed instead of the throttle opening as a parameter for determining conditions for valve switching.

FIG. 3 shows the manner in which the air/fuel ratio varies dependent on valve switching at the throttle opening $\theta s$, for example, in FIG. 2. More specifically, in a low engine rotational speed range, the 2-valve mode is selected, and the air/fuel ratio can be set to an extremely lean value. When the engine rotational speed is increased in excess of Ne1, the 4-valve mode is selected. As indicated by the curve R in FIG. 3, illustrating increasing engine speed, the air/fuel ratio is gradually made richer starting from a time when the engine rotational speed is much lower than Ne1 a nd is continually increased in richness. When the engine rotational speed slightly exceeds Ne1 (i.e., switching to 4-valve mode), the air/fuel ratio is set to a comparatively rich value which may be the stoichiometric air/fuel ratio of 14.7.

When the engine rotational speed is lowered from a range in which the 4-valve mode is selected and the engine rotational speed reaches Ne2, switching from the 4-valve mode to the 2-valve mode is effected as shown in FIG. 2. During the decrease in engine speed, the air/fuel ratio is gradually made leaner starting from a time when the engine rotational speed is slightly higher than Ne2 as represented by the curve S in FIG. 3. The air/fuel ratio reaches the leanest value, as described above, only when the engine rotational speed becomes much lower than Ne2 (i.e., switching to 2-valve mode).

In actual applications, valve switching timing or setting of an air/fuel ratio valve can be achieved by a map look-up system in a central processing unit (not shown) or a closed loop system, whichever system is more advantageous according to various conditions.

Thus an engine can be operated at an extremely lean air/fuel ratio in a 2-valve mode, and hence fuel economy can be improved without sacrificing the output performance of the engine. By gradually varying the air/fuel mixture in the range of the switching between 2-valve and 4-valve modes between such lean mixture and the normally preferred mixture, the transition between modes can be accomplished smoothly.

It will be seen that at least in the preferred methods the air/fuel ratio is controlled by varying the air/fuel ratio in relation to the operation of a valve switching device for achieving both increased engine output performance and fuel economy while avoiding sudden power output charges or shocks which might otherwise result from valve switching.

## Claims

1. A method of controlling an air/fuel ratio for an internal combustion engine having a valve switching device for changing the effective opening of intake valves to the cylinder of an engine as a function of at least engine rotational speed, comprising:
   gradually varying the air/fuel ratio according to at least a change in said engine rotational speed in a range of rotational speeds including when said valve switching device changes the valve effective opening, toward a richer air/fuel ratio during increasing engine rotational speed (R) and a leaner air/fuel ratio during decreasing engine rotation speed (S).

2. A method according to claim 1, including the steps of opening and closing the intake valves in a manner for maximizing the flow of intake air in a high engine rotational speed range and for relatively restricting the flow of intake air in a low engine rotational speed range.

3. A method according to claims 1 or 2, including the step of starting the gradual varying of the air/fuel ratio before reaching the rotational speed at which the valve switching occurs.

4. A method according to any preceding claim, including the step of continuing said gradual varying of the air/fuel ratio beyond the rotational speed at which the valve switching occurs.

5. A method according to claim 4, including the step of continuing said gradual varying the air/fuel ratio over a substantial range of rotational speeds below the rotational speed at which the valve switching occurs during engine speed decreasing operation (S).

6. A method according to any preceding claim, including the step of causing the operation of the valve switching device to occur at a higher rotational speed during engine speed increasing operation (R) than during engine speed decreasing operation (S).

7. A method according to claim 6, wherein the difference in rotational speed between valve switching device operation during engine speed increasing (R) and decreasing (S) operation is relatively constant over all ranges of opening of a throttle valve for the engine.

## Revendications

1. Procédé pour commander un rapport air/combustible pour un moteur à combustion interne comportant un dispositif de commutation des soupapes pour modifier l'ouverture efficace des soupapes d'admission dans le cylindre du moteur en fonction d'au moins la vitesse de rotation du moteur, comprenant:
   une modification progressive du rapport air/combustible en fonction d'au moins une modification de ladite vitesse de rotation du moteur dans une plage de vitesses de rotation comprenant le point auquel le dispositif de commutation des soupapes modifie l'ouverture efficace de celles-ci, vers un rapport air/combustible plus riche pendant l'augmentation de la vitesse de rotation du moteur (R) et vers un rapport plus pauvre pendant la diminution de la vitesse de rotation du moteur (S).

2. Procédé suivant la revendication 1, comprenant les phases d'ouverture et de fermeture des soupapes d'admission d'une façon apte à maximaliser l'écoulement de l'air d'admission dans une plage de vitesses élevées de rotation du moteur et pour limiter relativement l'écoulement de l'air d'admission dans une plage de faibles vitesses de rotation du moteur.

3. Procédé suivant la revendication 1 ou 2, comprenant la phase de démarrage de la modification progressive du rapport air/combustible avant d'atteindre la vitesse de rotation à laquelle se produit la commutation des soupapes.

4. Procédé suivant l'une quelconque des revendications précédentes, comprenant la phase consistant à continuer ladite modification progressive du rapport air/combustible au-delà de la vitesse de rotation pour laquelle se produit la commutation des soupapes.

5. Procédé suivant la revendication 4, comprenant la phase consistant à continuer ladite modification progressive du rapport air/combustible sur une plage substantielle de vitesses de rotation au-dessous de la vitesse pour laquelle se produit la commutation des soupapes pendant la diminution de la vitesse du moteur (S).

6. Procédé suivant l'une quelconque des revendications précédentes, comprenant la phase consistant à provoquer le fonctionnement du dispositif de commutation des soupapes pour une vitesse de rotation plus élevée pendant l'augmentation de la vitesse du moteur (R) que pendant la diminution de la vitesse du moteur (S).

7. Procédé suivant la revendication 6, dans lequel la différence de vitesse de rotation entre le fonctionnement du dispositif de commutation des soupapes pendant l'augmentation de vitesse du moteur (R) et a diminution de vitesse (S) est relativement constante sur la totalité des plages d'ouverture d'un papillon des gaz du moteur.

**Ansprüche**

1. Verfahren zur Einstellung eines Luft/Treibstoff-Verhältnisses für eine Brennkraftmaschine mit einer Ventilschalteinrichtung zum Ändern der wirksamen Öffnung von Einlaßventilen zu dem Zylinder eines Motors als eine Funktion von wenigstens der Motordrehzahl umfassend: graduelles Verändern des Luft/Treibstoff-Verhältnisses gemäß wenigstens einer Änderung der Motordrehzahl während eines Anstiegs der Motordrehzahl (R) zu einem fetteren Luft/Treibstoff-Verhältnis und während eines Abfalls der Motordrehzahl (S) zu einem magereren Luft/Treibstoff-Verhältnis in einem Bereich von Drehzahlen einschließlich, wenn die Ventilschalteinrichtung die wirksame Ventilöffnung ändert.

2. Verfahren nach Anspruch 1 umfassend die Schritte des Öffnens und Schließens der Einlaßventile in einer Weise, um den Fluß von Einlaßluft in einem hohen Motordrehzahlbereich zu maximieren und um den Fluß von Einlaßluft in einem niedrigen Motordrehzahlbereich relativ einzuschränken.

3. Verfahren nach Anspruch 1 oder 2 umfassend den Schritt, das graduelle Verändern des Luft/Treibstoff-Verhältnisses zu beginnen, bevor die Drehzahl erreicht ist, bei der das Schalten der Ventile stattfindet.

4. Verfahren nach einem der vorhergehenden Ansprüche umfassend den Schritt, das graduelle Verändern des Luft/Treibstoff-Verhältnisses über die Drehzahl hinaus fortzusetzen, bei der das Schalten der Ventile stattfindet.

5. Verfahren nach Anspruch 4 umfassend den Schritt, das graduelle Verändern des Luft/Treibstoff-Verhältnisses über einen wesentlichen Bereich von Drehzahlen unterhalb der Drehzahl, bei der das Schalten der Ventile stattfindet, während die Motordrehzahl verringerndem Betrieb (S) fortzusetzen.

6. Verfahren nach einem der vorhergehenden Ansprüche umfassend den Schritt auf den Betrieb der Ventilschalteinrichtung (30) so zu wirken, daß er während eines die Motordrehzahl erhöhenden Betriebs (R) bei einer höheren Drehzahl als während einem die Motordrehzahl verringernden Betrieb (S) stattfindet.

7. Verfahren nach Anspruch 6, bei dem die Drehzahldifferenz zwischen dem Betrieb der Ventilschalteinrichtung während des die Motordrehzahl erhöhenden (R) und verringernden (S) Betriebs über alle Öffnungsbereiche einer Drosselklappe für den Motor relativ konstant ist.

FIG.1.

FIG.2.

FIG.3.